# EUROPÄISCHE PATENTANMELDUNG

(11) **EP 1 375 732 A2**
(43) Veröffentlichungstag der Anmeldung: **02.01.2004**
(21) Anmeldenummer: 03013118.9
(22) Anmeldetag: 11.06.2003
(51) Int. Cl.: D06P 3/32, D06P 7/00, B60N 2/58

(54) **Verfahren zur Herstellung eines Bezugsmaterials für Fahrzeuge, insbesondere eines Sitzbezuges für Kraftfahrzeuge**

(30) Priorität: 11.06.2002 DE 10225906; 28.05.2003 DE 10324385
(71) Anmelder: Car Trim Biermann, Marktfort und Dr. Rau GbR, 08529 Plauen (DE)
(72) Erfinder: Biermann, Ernst, 85101 Lenting (DE); Markfort, Thomas, 08523 Plauen (DE); Rau, Friedrich, Dr.-Ing, 08261 Schöneck (DE)
(74) Vertreter: Haft, von Puttkamer, Berngruber, Czybulka

(57) **Zusammenfassung**

Die Erfindung betrifft ein Verfahren zur Herstellung eines Bezugsmaterials aus Leder für Fahrzeuge, insbesondere eines Sitzbezuges für Fahrzeuge, wobei in an sich bekannter Weise aus Rohleder "wetblue" hergestellt wird. Das "wetblue" wird in einem ersten Schritt (H1) getrocknet und danach in einem zweiten Schritt (H2) in einem Behältnis gemillt, wobei bei der Rotation des Behältnisses beim Millen das "wetblue" gefaltet bzw. geknittert wird, sodass im Bereich der Falten bzw. Knitter eine größere Dehnung bzw. Streckung erfolgt. In einem dritten Schritt (H3) wird das gemillte "wetblue" mit flüssigem Färbemittel behandelt, wobei das Färbemittel die Bereiche der Falten bzw. Knitter besser erreicht als die sonstigen Bereiche des "wetblue" und stärker in die gedehnten bzw. gestreckten Bereiche der Falten bzw. Knitter eindiffundiert.

## Beschreibung

Die vorliegende Erfindung betrifft ein Verfahren zur Herstellung eines Bezugsmaterials für Fahrzeuge, insbesondere eines Sitzbezuges für Fahrzeugsitze, nach dem Oberbegriff des Patentanspruches 1.

Üblicherweise bestehen Sitzbezüge für Fahrzeugsitze aus Textilgeweben oder Leder. Die Bestrebungen gehen bei aus Leder bestehenden Sitzbezügen, vor allem auch wegen der bestehenden Anforderungen der Automobilindustrie dahin, ein möglichst gleichmäßiges und homogenes Ledermaterial zur Erzielung eines einheitlich reproduzierbaren optischen Bildes unter Serienbedingungen zu verwenden.

Ausgehend von der zuvor geschilderten Sachlage besteht die Aufgabe der vorliegenden Erfindung darin, entgegen den Anforderungen der Automobilindustrie ein Bezugsmaterial für Fahrzeuge, insbesondere einen Sitzbezug für Fahrzeugsitze, zu schaffen, der so ausgestaltet ist, dass er bei Fahrzeugkäufern bzw. -benutzern eine vergleichsweise große Akzeptanz findet

Diese Aufgabe wird durch ein Bezugsmaterial mit den Merkmalen des Patentanspruches 1 gelöst.

Der wesentliche Vorteil der vorliegenden Erfindung besteht darin, dass ein mit dem vorliegenden Bezugsmaterial bezogener Sitzbezug ein auf dem Sektor der Fahrzeugsitze völlig neues 0berflächenbild aufweist, das durch eine Vielzahl von nicht beeinflussbaren und nicht reproduzierbaren optischen Merkmalen, z.B. Marmorierungen bzw. Melierungen, speziell im Hinblick auf die Farbgestaltung geprägt ist. Durch einen solchen Sitzbezug wird einem Fahrzeugsitz eine Art Patina verliehen, die beim Käufer bzw. Benutzer eine künstliche Gebrauchsvision erzeugt und so viel wie "Bequemlichkeit, Wärme, Weichheit, Komfort, Natürlichkeit etc." vermittelt.

Ein wesentlicher Vorteil besteht auch darin, dass die Akzeptanz für mit dem erfindungsgemäßen Bezugsmaterial versehene Fahrzeugsitze beim Käufer relativ hoch liegt, sodass den erfindungsgemäßen Sitzbezügen eine hohe wirtschaftliche Verwertbarkeit zukommt. Im Gegensatz zu hohen Sitzbezügen aus Leder werden der Eindruck von Kälte, Unpersönlichkeit, harten Strukturen und scharfen Übergängen vermieden.

Vorteilhafterweise vermittelt ein mit dem erfindungsgemäßen Bezugsmaterial versehener Sitzbezug das Gefühl des "bereits Gebrauchtseins", so dass während des tatsächlichen Gebrauchs auftretende Verschleißerscheinungen, wie z.B. Risse, Kratzer oder Flecke, tatsächlich nicht oder kaum in Erscheinung treten bzw. auffallen und das mit den Sitzbezügen ausgerüstete Fahrzeug daher länger einen neuwertigen Eindruck vermittelt.

Die Einfärbung bzw. die sogenannte Grundfärbung erfolgt nach dem Fleckfärben vorzugsweise benutzerspezifisch, sodass während des Gebrauches von außen auf das Bezugsmaterial einwirkende Abfärbungen (beispielsweise von der Farbe einer Berufskleidung etc.) so wenig wie möglich in Erscheinung treten.

Vorteilhafte Ausgestaltungen der Erfindung gehen aus den Unteransprüchen hervor.

Im folgenden werden die Erfindungen deren Ausgestaltungen im Zusammenhang mit den Figuren näher erläutert. Es zeigen:
- Figur 1: einen beispielhaften Ausschnitt eines erfindungsgemäßen Bezugmaterials, insbesondere eines Sitzbezuges für Automobilsitze;
- Figur 2: eine schematische Darstellung zur Erläuterung des Herstellungsverfahrens des erfindungsgemäßen Bezugsmaterials, und
- Figur 3: die Einbindung des Herstellungsverfahrens für das erfindungsgemäße Bezugsmaterial in das bekannte Verfahren zur Lederherstellung.

Zu der Erfindung führten die folgenden Überlegungen. Um auf dem Gebiete der Fahrzeugindustrie, insbesondere der Automobilindustrie, die Akzeptanz für Bezugsmaterialien wesentlich zu erhöhen, wurde erstmals der Gedanke gefasst, bei aus Leder bestehenden Bezugsmaterialien von der gängigen Praxis abzuweichen, die entsprechend der ausdrücklichen Anforderung der Automobilindustrie auf der Verarbeitung von möglichst gleichmäßigen und homogenen, durch Serienproduktion zuverlässig einheitlich reproduzierbaren Ledermaterialien beruht. Da derartige Ledermaterialien kalt und unpersönlich wirken, wurde im Zusammenhang mit der vorliegenden Erfindung erstmals der Gedanke gefasst, vor allem entgegen den genannten Anforderungen der Automobilindustrie von den einheitlich und homogen reproduzierbaren Ledermaterialien abzugehen und ganz bewusst Inhomogenitäten und Ungleichmäßigkeiten, insbesondere im Hinblick auf die Farbgestaltung, bei Bezugsmaterialien auf den Fahrzeugbereich zuzulassen. Dadurch wird insbesondere durch völlig willkürliche Melierungen und Marmorierungen bzw. Fleckungen der Bezugsmaterialen, entgegen der bisher üblichen Uniformität solcher Materialien, ein Gefühl der Individualität und des Gebrauchs vermittelt. Dadurch, dass der Eindruck vermittelt wird, dass die mit dem vorliegenden Bezugsmaterial versehene Ausstattungen bzw. Fahrzeugsitze in einem gewissen Maße bereits benutzt bzw. gebraucht wurden, wird erreicht, dass beim tatsächlichen Gebrauch entstehende Verschleißerscheinungen, wie z. B. Risse, Flecken etc. so gut wie nicht in Erscheinung treten. Auf diese Weise kann der gesamte Wert eines mit den vorliegenden Bezugsmaterialien ausgestatteten Fahrzeuges wesentlich länger erhalten werden. Insbesondere eigenen sich die vorliegenden Bezugsmaterialien neben der Verwendung als Sitzbezüge für Fahrzeugsitze auch überall dort in Fahrzeugen, wo Fahrzeugausstattungen, wie z.B. Lenkräder, Haltegriffe, Türverkleidungstafeln, Schalttafeln, Armaturen, Schaltknöpfe etc., häufig angefasst und benutzt werden. Dadurch, dass solche Ausstattungen dann, wenn sie mit den erfindungsgemäßen Bezugsmaterialen bezogen sind, von Haus aus schon in einem gewissen Maß benutzt erscheinen werden während des eigentlichen Gebrauchs z.B. auch durch die Einwirkung von Feuchtigkeit oder Schweiß eintretende Auswirkungen der Benutzung nicht oder kaum wahrgenommen.

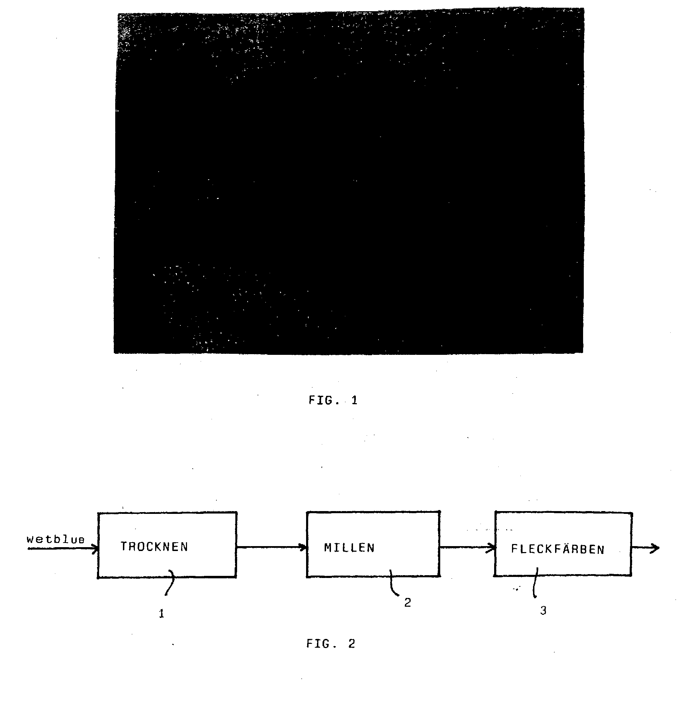

Die im Zusammenhang mit der vorliegenden Erfindung auf dem Fahrzeuggebiet insbesondere als Sitzbezüge verwendeten Ledermaterialien besitzen ein ästhetisches Äußeres, wie es beispielhaft die Figur 1 zeigt. Das optische Bild dieser Sitzbezüge ist durch farbliche Unregelmäßigkeiten und Inhomogenitäten gekennzeichnet, die den Eindruck eines bereits gebrauchten Ledermaterials vermitteln.

Die Herstellung des vorliegenden Ledermaterials erfolgt gemäß Figur 2 vorzugsweise durch ein Verfahren, bei dem in einem ersten Schritt 1 das sogenannte "wetblue" getrocknet wird. Danach wird das getrocknete "wetblue" in einem zweiten Schritt 2 in einem Behältnis, insbesondere einem Fass, gemillt, wobei bei der Rotation des Fasses das "wetblue" gefaltet bzw. geknittert wird. Die Oberflächenbeschaffenheit des "wetblue" wird beim Millen derart verändert, dass im Bereich der Knitter und Falten eine größere Streckung bzw. Dehnung auftritt, wobei gleichzeitig beim Schritt 3 zugegebene flüssige Färbemittel mehr exponiert sind als die sonstigen Bereiche des "wetblue". Aus diesem Grunde können die Farbstoffe des Färbemittels zum einen die Knitter- bzw. Faltenbereiche besser erreichen und zum anderen besser in die gestreckten bzw. gedehnten Knitter- bzw. Faltenbereiche eindiffundieren. Dies hat zur Folge, dass die Knitter- bzw. Faltenbereiche dunkler erscheinen als die restlichen Bereiche. Dadurch wird dem "wetblue" der genannte optische Eindruck verliehen, der künstlich den Eindruck einer bereits erfolgten Benutzung bzw. eines bereits erfolgten Gebrauchs und daher einer Individualität vermittelt.

Danach wird dem so behandelten Fleckleder in einem weiteren Färbeschritt die sogenannte Grundfärbung verliehen, wobei eine flächige Harmonisierung durch Überlagerung der Fleckfärbung und der Grundfärbung herbeigeführt wird. Die finale Grundfärbung kann in einem eigenen Färbefaß oder in auch in dem Millfaß erfolgen, in dem die Fleckfärbung ausgeführt wurde. Die Temperatur liegt dabei höher als die Temperatur des Fleckfärbens.

Insbesondere eignen sich die vorliegenden Bezugsmaterialien zur Verwendung als Sitzbezüge bei Fahrzeugen, wie insbesondere 0ff-Road-Fahrzeugen, landwirtschaftlichen Fahrzeugen, wie z.B. Traktoren etc., deren Käufer auf Individualität, Wildheit, Urigkeit etc. wert legen. Zur Anpassung an mit den vorliegenden Bezugsmaterialien bezogene Fahrzeugsitze können damit vorteilhaft auch andere Ausstattungselemente eines Fahrzeuges, die insbesondere einer großen Benutzung unterliegen, wie z.B. Lenkräder, Türgriffe, Schalthebel, Schaltknöpfe, Armaturen, Schalttafeln etc. mit dem Bezugsmaterial bezogen werden.

Das gesamte Interieur eines Fahrzeuges kann zur Erreichung einer modischen Eleganz und Harmonie auf den hellen oder dunklen Farbton des vorliegenden Bezugsmaterials, insbesondere der vorliegenden Sitzbezüge, abgestimmt werden.

Es ist denkbar, das vorliegende Bezugsmaterial in den unterschiedlichsten Hell-Dunkel-Farbkombinationen herzustellen. Dabei erfolgt die Einfärbung nach der Fleckfärbung bei der Grundfärbung vorzugsweise benutzerspezifisch. Beispielsweise erfolgt die Einfärbung für Jeansträger nach der schwarzen Fleckfärbung in der Farbe Blau. Dies ist vorteilhaft, weil Jeans häufig abfärben und diese Abfärbungen dann nicht sichtbar in Erscheinung treten. Allgemein ausgedrückt kann die Grundfärbung in Abhängigkeit von der beim Gebrauch zu erwartenden Verschmutzung ausgesucht bzw. ausgelegt werden.

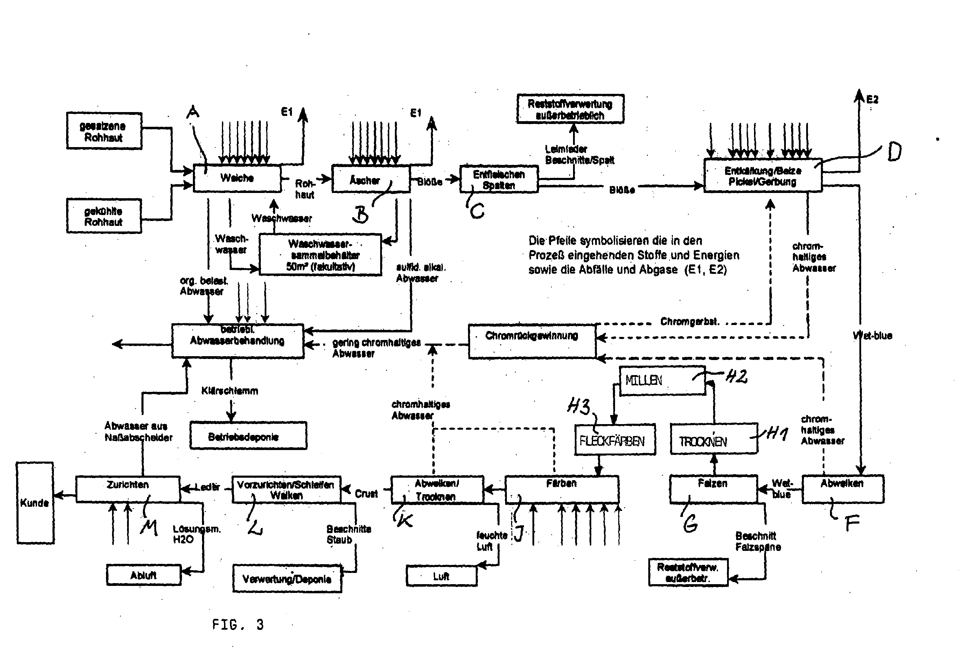

Gemäß Figur 3, die das an sich bekannte Prinzip der Lederherstellung zeigt, werden die Rohhäute z.B. in rotierenden Fässern zuerst einer Weiche (Schritt A) unterworfen, wobei sie den durch Konservierung verlorengegangenen Wassergehalt der schlachtfrischen Haut zurückgewinnen und zugleich von Konservierungsmitteln und Verunreinigungen freigewaschen werden. Es folgt eine Faßoder Haspelbehandlung mit haarzerstörenden Mitteln (Schritt B: Äscher). Die enthaarten Blößen werden nach dem Spalten (Schritt C) im Haspel durch kombiniertes Entkalken und Beizen (Schritt D) neutralisiert und dadurch in den Quellungszustand der geweichten Haut zurückversetzt. Anschließend erfolgt die Gerbung (ebenfalls Schritt D). Das chromgegerbte "wetblue" wird durch Abwelken getrocknet (Schritt F) und gefalzt bzw. auf gleiche Dicke gebracht (Schritt G). Normalerweise wird das "wetblue" danach gefärbt (Schritt I), getrocknet (Schritt K), und schließlich zugerichtet (Schritte L und M).

Die im Zusammenhang mit der Herstellung des erfindungsgemäßen Bezugsmaterials ausgeführten Schritte der Figur 2 sind in der Figur 3 dargestellt und mit H1 H2 und H3 bezeichnet. Dabei folgt der Schritt H1, bei dem das "wetblue" nach dem Falzen noch einmal getrocknet wird, nach dem Schritt G. In der dargestellten Reihenfolge werden die Schritt H1, H2 und H3 entsprechend den Schritten 1, 2 und 3 der Figur 2 ausgeführt. Es wird dann mit dem Schritt I fortgefahren, bei dem die zuvor erläuterte Grundfärbung erfolgt.

## Patentansprüche

1. Verfahren zur Herstellung eines Bezugsmaterials aus Leder für Fahrzeuge, insbesondere eines Sitzbezuges für Fahrzeuge, wobei in an sich bekannter Weise aus Rohleder "wetblue" hergestellt wird, **dadurch gekennzeichnet, dass** das "wetblue" in einem ersten Schritt (H1) getrocknet und danach in einem zweiten Schritt (H2) in einem Behältnis gemillt wird, wobei bei der Rotation des Behältnisses beim Millen das "wetblue" gefaltet bzw. geknittert wird, sodass im Bereich der Falten bzw. Knitter eine größere Dehnung bzw. Streckung erfolgt, und dass in einem dritten Schritt (H3) das gemillte "wetblue" mit flüssigem Färbemittel behandelt wird, wobei das Färbemittel die Bereiche der Falten bzw. Knitter besser erreicht als die sonstigen Bereiche des "wetblue" und stärker in die gedehnten bzw. gestreckten Bereiche der Falten bzw. Knitter eindiffundiert.

2. Verfahren nach Anspruch 1, **dadurch gekennzeichnet, dass** in einem vierten Schritt (J) dem "wetblue" eine Grundfärbung verliehen wird.

3. Verfahren nach Anspruch 2, **dadurch gekennzeichnet, dass** der erste Schritt (H1 nach einem an sich bekannten Falzschritt (G) ausgeführt wird.

4. Verfahren nach Anspruch 2 oder 3, **dadurch gekennzeichnet, dass** der vierte Schritt (I) in dem Behältnis oder in einem separaten Behälter ausgeführt wird.

5. Verfahren nach einem der Ansprüche 2 bis 3, **dadurch gekennzeichnet, dass** die Temperatur beim vierten Schritt (I) höher ist als beim dritten Schritt (H3).

6. Bezugsmaterial, hergestellt nach dem Verfahren gemäß einem der Ansprüche 1 bis 5, für Sitzbezüge für Fahrzeugsitze, insbesondere Off-Road-Fahrzeuge und landwirtschaftliche Fahrzeuge, sowie als Bezugsmaterial für Lenkräder, Türgriffe, Schalthebel, Schaltknöpfe, Armaturen, Schalttafeln und Innenverkleidungsbereiche der Fahrzeuge.
